# EUROPÄISCHE PATENTSCHRIFT

(11) **EP 3 477 045 B1**
(45) Veröffentlichungstag und Bekanntmachung des Hinweises auf die Patenterteilung: **29.04.2020**
(21) Anmeldenummer: 18178418.2
(22) Anmeldetag: 19.06.2018
(51) Int. Cl.: F01D 5/00

(54) **LEITSCHAUFEL MIT WÄRMEROHRWAND, SYSTEM MIT LEITSCHAUFEL UND VERFAHREN ZUR HERSTELLUNG EINER LEITSCHAUFEL**
VANE HAVING HEAT PIPE WALL, SYSTEM HAVING VANE AND METHOD FOR THE PRODUCTION OF A VANE
AUBE DIRECTRICE POURVUE DE CALODUC, SYSTÈME D'AUBE DIRECTRICE ET PROCÉDÉ DE FABRICATION D'UNE AUBE DIRECTRICE

(30) Priorität: 27.10.2017 DE 102017010023
(43) Veröffentlichungstag der Anmeldung: 01.05.2019
(73) Patentinhaber: MTU Aero Engines AG, 80995 München (DE)
(72) Erfinder: Schmitz, Oliver, 80798 München (DE)

(56) Entgegenhaltungen:
- EP-A1- 2 868 866
- EP-A2- 1 884 625
- EP-A2- 1 895 124
- DE-A1- 2 101 096
- DE-A1- 2 821 270
- DE-A1- 19 926 817

## Beschreibung

Die vorliegende Erfindung betrifft eine Leitschaufel für eine Strömungsmaschine, ein System mit einer derartigen Leitschaufel sowie ein Verfahren zu Herstellung einer Leitschaufel. Die Leitschaufel umfasst dabei jeweils eine mit einem Kapillarsystem durchsetzte Wärmerohrwand.

Für verschiedene Anwendungsgebiete ist der Einsatz von Wärmeleittechnik in Form von Wärmerohren (die auch als "Wärmeleitrohre" bezeichnet werden) bekannt. Diese beruhen auf dem Prinzip der Wärmeübertragung mittels eines zirkulierenden Fluids, das in gasförmigem Zustand durch einen Hohlraum von einem heißen in einen kühleren Bereich strömt, dort kondensiert und in flüssigem Zustand durch ein Kapillarsystem aufgenommen wird. In dessen Kapillaren wird das Fluid dann zurück zum heißen Bereich geleitet, wo es wiederum verdampft.

Die Anwendung der genannten Technik zum Kühlen von Leitschaufeln wird beispielsweise in den Druckschriften "A Parametric Study of Heat Pipe Turbine Vane Cooling" von Z.J. Zuo et al. (International Gas Turbine & Aeroengine Congress & Exhibition, Orlando, Florida, June 2 - 5, 1997) und "Heat Pipe Turbine Vane Cooling" von L. Langston et al. (Advanced Turbine Systems Annual Program Review, West Virginia, Oct. 17 - 19, 1995) beschrieben. Diese Veröffentlichungen zeigen jeweils Leitschaufeln mit Hohlräumen, deren Wandbeschichtungen Wärmeleitrohre ausbilden. Damit sollen insbesondere thermodynamische Verluste reduziert oder sogar vermieden werden, die bei einer Kühlung mit in den Strömungskanal eingeleiteter Luft entstehen.

In der Druckschrift US 5 975 841 ist eine Wärmerohrkühlung für ein Turbinenleitgitter offenbart, die insbesondere einen vorteilhaften Abtransport von Wärme ermöglichen soll. Im Inneren einer Leitschaufel sind dabei mehrere Kammern ausgebildet, deren Wände eine Metallpulverbeschichtung aufweisen, durch die ein Fluid in die Kammern hinein verdampfen kann. Der Dampf kann dann durch die Kammern sowie durch einen adiabatischen Abschnitt in Hohlräume einer Kondensationsrippe strömen, an deren Innenwänden er kondensiert. Das Kondensat wird mittels Kapillaren zurück zur Wandbeschichtung der Kammern in der Leitschaufel geführt.

Weiterer Stand der Technik ist aus den Druckschriften US 8 844 877 B1, US 2010/0263388 A1 und EP 1 884 628 A2 bekannt.

Die EP 1 884 625 A2 betrifft ein Wärmeübertragungssystem mit einem primären Wärmerohr, das teilweise in einer Nachleitgitterschaufel angeordnet ist, wobei Arbeitsfluid außerhalb der Schaufel verdampft, zu kalten Schaufelbereichen strömt, dort kondensiert, um diese zu enteisen, und mittels Kapillarwirkung zurücktransportiert wird.

Die vorliegende Erfindung hat die Aufgaben, eine verbesserte mittels Wärmeleittechnik zu kühlende Leitschaufel sowie ein Verfahren zur Herstellung einer solchen Leitschaufel bereitzustellen.

Die Aufgaben werden gelöst durch eine Leitschaufel gemäß Anspruch 1, ein System gemäß Anspruch 9 und ein Verfahren nach Anspruch 10. Vorteilhafte Ausführungsformen sind in den Unteransprüchen, der Beschreibung und der Figur offenbart.

Eine erfindungsgemäße Leitschaufel für eine Strömungsmaschine umfasst eine mit einem Kapillarsystem durchsetzte Wärmerohrwand, also eine Wand eines Wärmerohrs zur Kühlung der Leitschaufel. Die Wärmerohrwand weist einen kontinuierlichen Materialübergang von einer ersten, die Leitschaufel nach außen begrenzenden Oberfläche (der Wärmerohrwand) zu einer zweiten, der ersten entgegengesetzten und einen Verdampfungshohlraum im Innern der Leitschaufel (mindestens teilweise) begrenzenden Oberfläche (der Wärmerohrwand) auf. Mindestens im Bereich der Wärmerohrwand ist die Leitschaufel somit nicht zum Verdampfungshohlraum hin beschichtet, sondern monolithisch ausgebildet, nämlich aus einem sich um die Kapillaren des Kapillarsystems herum durchgehend von der ersten Oberfläche (die mindestens ein Teil der Außenoberfläche der Leitschaufel ist) bis zur zweiten Oberfläche (die mindestens einen Teil einer Randfläche zum Verdampfungshohlraum bildet) erstreckenden Material; gemäß einer vorteilhaften Ausführungsform ist die Leitschaufel sogar insgesamt als Monolith ausgebildet.

Die erfindungsgemäße Ausbildung der Wärmerohrwand unter Vermeidung einer Beschichtung ermöglicht eine effiziente Kühlung der Leitschaufel bei gleichmäßiger Temperaturverteilung mittels Wärmeleittechnik. Die monolithische Ausbildung zumindest in dem genannten Bereich verbessert gegenüber einer Beschichtung die Wärmeanbindung. Im Vergleich zu einer herkömmlichen Leitschaufel kann die Leitschaufelwand dabei ohne Stabilitätsverlust dünner und somit mit geringerer Masse ausgebildet werden, sind doch die Kapillaren des Kapillarsystems im Bereich der Wärmerohrwand als Teil der Leitschaufelwand direkt in diese eingebettet. Eine erfindungsgemäße Leitschaufel kann vorzugsweise ganz oder teilweise mittels eines generativen Fertigungsverfahrens hergestellt sein, beispielsweise mittels selektiven Laserschweißens.

Ein erfindungsgemäßes Verfahren dient einer Herstellung einer erfindungsgemäßen Leitschaufel gemäß einer der in dieser Schrift offenbarten Ausführungsformen. Zumindest die Wärmerohrwand der Leitschaufel mit dem Kapillarsystem wird dabei mittels generativer Fertigung ausgebildet, beispielsweise mittels selektiven Laserschweißens; gemäß einer speziellen Ausführungsvariante wird die gesamte Leitschaufel generativ gefertigt.

Die generative Fertigung ermöglicht auf einfache Weise eine Integration eines jeweiligen Kapillarsystems in das Leitschaufelmaterial, ohne dass geometrische Bedingungen die jeweilige Ausbildung der Kapillaren einschränken. Das Verfahren erlaubt daher insbesondere eine Optimierung des Kapillarsystems im Sinne der Wärmeleitung und einer Vermeidung von Verlusten beim Durchflussdruck.

Ein erfindungsgemäßes System enthält mindestens eine erfindungsgemäße Leitschaufel gemäß einer der in dieser Schrift offenbarten Ausführungsformen. Das Kapillarsystem der mindestens eine Leitschaufel ist dabei mindestens Teil eines in dem System abgeschlossenen Innenvolumens, das ein Kühlfluid enthält. Das Kühlfluid ist dabei vorzugsweise dazu eingerichtet, in einem zu kühlenden Heißbereich des Systems zu verdampfen und in einem Kaltbereich des Systems, an den Wärme abgegeben werden kann, zu kondensieren. Das Kühlfluid kann beispielsweise ein Flüssigmetall sein.

Eine erfindungsgemäße Leitschaufel kann eine Turbinenleitschaufel oder eine Verdichterleitschaufel sein.

Da die Kühlung bei einem erfindungsgemäßen System auf einem geschlossenen Innenvolumen beruht und keine Kühlluft erforderlich ist, kann die Kühlung unabhängig vom jeweiligen Luftdruck erfolgen. Eine erfindungsgemäße Leitschaufel bzw. ein erfindungsgemäßes System ist daher insbesondere zur Verwendung unter hohen Druckverhältnissen geeignet. Insbesondere kann eine erfindungsgemäße Leitschaufel bzw. ein erfindungsgemäßes System dazu eingerichtet sein, in einem Hochdruckverdichter (und damit brennkammernah) eingesetzt zu werden.

Gemäß einer vorteilhaften Ausführungsform der vorliegenden Erfindung weist die Wärmerohrwand mindestens einen Bereich auf, in dem sie - bezogen auf ihre Wandstärke - zwei Hälften mit voneinander verschiedener Porosität (und/oder voneinander verschiedener Kapillarengesamtlänge), zwei oder drei Drittel mit (jeweils) voneinander verschiedener Porosität (und/oder Kapillarengesamtlänge) und/oder zwei, drei oder vier Viertel mit (jeweils) voneinander verschiedener Porosität (und/oder Kapillarengesamtlänge) umfasst. Die Trennung zwischen den Hälften voneinander ist dabei (vorzugsweise abstrakt, also gedanklich ohne materielle Ausprägung) jeweils durch die Punkte gegeben, die zur ersten Oberfläche den gleichen Abstand haben wie zur zweiten Oberfläche; Analoges gilt für die Trennung zwischen den Dritteln bzw. Vierteln (bei denen das Abstandsverhältnis entsprechend (1:2 oder 2:1 ist (für Drittel) bzw. 1:3, 2:2 oder 3:1 (für Viertel)) .

Als "Porosität" ist das Verhältnis des im jeweiligen Anteil enthaltenen Kapillarenvolumens (d.h. des/der durch Kapillaren gebildeten Hohlraums/Hohlräume) zum Gesamtvolumen des Anteils zu verstehen. Die "Kapillarengesamtlänge" ergibt sich als die Summe aller Längen von Kapillarabschnitten in dem jeweiligen Anteil (d.h. in der jeweiligen Hälfte bzw. dem jeweiligen Drittel bzw. Viertel).

Als "Bereich" der Wärmerohrwand wird in dieser Schrift ein Teil der Wärmerohrwand bezeichnet, der sich durchgehend von einem ersten Flächenbereich auf der ersten Oberfläche zu einem zweiten Flächenbereich auf der zweiten Oberfläche erstreckt.

Vorteilhaft ist eine Weiterbildung, bei der die Porosität in einer äußeren (also der Außenfläche der Leitschaufel zugewandten) Hälfte (bzw. einem äußersten Drittel bzw. einem äußersten Viertel) des mindestens einen Bereichs der Wärmerohrwand kleiner ist als in der weiter innen (also dem Verdampfungshohlraum zugewandten) liegenden Hälfte (bzw. einem weiter innen liegenden Drittel bzw. Viertel). Insbesondere bevorzugt ist eine Variante, bei der die Porosität der jeweiligen Anteile nach innen hin zunimmt, so dass also beispielsweise ein äußerstes Drittel eine geringere Porosität aufweist als ein mittleres Drittel der Wärmerohrwand, das wiederum eine geringere Porosität hat als ein am weitesten innen liegendes Drittel der Wärmerohrwand; analog kann die Porosität von Viertel zu Viertel nach innen hin zunehmen.

Auf diese Weise kann eine vorteilhafte Zuleitung von Flüssigkeit durch die Kapillaren zur zweiten, den Verdampfungshohlraum begrenzenden Oberfläche der Wärmerohrwand und eine gleichmäßige Verteilung der Flüssigkeit auf dieser Oberfläche erfolgen, die eine besonders ergiebige Verdampfung bewirkt.

Analog kann die Porosität der Wärmerohrwand entlang der Oberfläche der Wärmerohrwand variieren: Gemäß einer vorteilhaften Ausführungsform der vorliegenden Erfindung weist die Wärmerohrwand zwei oder mehr Bereiche auf, die (insgesamt) voneinander verschiedene Porositäten haben. Die jeweilige Porosität (und damit das Kapillarsystem im jeweiligen Bereich) kann damit an eine jeweilige Position des Bereichs an der Leitschaufel angepasst sein; einer der Bereiche kann beispielsweise einen größeren Abstand zu einer Anströmkante als ein anderer der Bereiche und/oder die Bereiche können auf verschiedenen Seiten (Druck- bzw. Saugseite) der Leitschaufel angeordnet sein und/oder sich (bezogen auf eine Rotationsachse des Rotors) in ihrer radialen Position bzw. in ihrem jeweiligen Abstand zu einer Leitschaufelspitze der Leitschaufel unterscheiden; der jeweilige Abstand ist dabei vorzugsweise durch den Abstand eines am dichtesten and der Leitschaufelspitze liegenden Punktes des jeweiligen Bereichs definiert.

Auf diese Weise kann ein jeweils optimaler Wärmetransport in dem jeweiligen Bereich eingerichtet werden. Insbesondere kann vermöge der lokalen Unterschiede in der Porosität eine jeweilige lokale Kühlung vorteilhaft arrangiert werden. Beispielsweise können in Bereichen, in denen eine starke Kühlung bewirkt werden soll, besonders viele feinverzweigte Kapillaren bzw. ein Bereich mit einer hohen Porosität angeordnet sein bzw. (in einem erfindungsgemäßen Verfahren) werden.

Die Kapillaren des Kapillarsystems münden zum Verdampfungsraum hin vorzugsweise jeweils in mindestens einer in der zweiten Oberfläche ausgebildeten jeweiligen Pore. Die erste, die Leitschaufel nach außen hin begrenzende Oberfläche der Wärmerohrwand hingegen ist vorzugsweise abgeschlossen, also porenfrei ausgebildet. Insbesondere ist das Kapillarsystem zur ersten Oberfläche hin vorzugsweise abgeschlossen, die Leitschaufel also in einem Bereich dieser Oberfläche massiv ausgebildet. Das Kapillarsystem hat dann keine Fluidverbindung zur ersten Oberfläche. Auf diese Weise kann sichergestellt werden, dass der kühlende Kreislauf mit Verdampfung und Kondensation ohne Verlust an Fluid abläuft.

Vorzugsweise umfasst das Kapillarsystem mindestens zwei Kapillaren bzw. Kapillarabschnitte, die voneinander verschiedene Querschnittsflächen (senkrecht zu einer Durchflussrichtung von Fluid durch die Kapillaren) aufweisen. Die Querschnittsflächen können sich beispielsweise in ihrer geometrischen Form und/oder ihrem Durchmesser (als größtem auftretendem Abstand zweier Randpunkte der Querschnittsfläche) unterscheiden. Mittels der unterschiedlichen Kapillaren bzw. Kapillarabschnitte kann ein optimales Verhältnis zwischen Durchfluss und Wärmeübertragung realisiert werden.

Vorteilhaft ist eine Ausführungsform der vorliegenden Erfindung, bei der das Kapillarsystem eine Vielzahl an Verzweigungen aufweist. Insbesondere kann das Kapillarsystem vorzugsweise in mindestens einem Bereich der Wärmerohrwand eine von außen nach innen (also zum Verdampfungshohlraum hin) zunehmende Verästelung aufweisen. So kann eine möglichst gleichmäßige Benetzung der zweiten Oberfläche mit Flüssigkeit, somit eine besonders starke Verdampfung und damit eine besonders effektive Kühlung der Leitschaufel erreicht werden.

Gemäß einer vorteilhaften Ausführungsform weist die Leitschaufel in ihrem Inneren wenigstens einen weiteren Verdampfungshohlraum auf, der mindestens teilweise durch eine mit einem Kapillarsystem durchsetzte, weitere Wärmerohrwand begrenzt ist. Wie die erste Wärmerohrwand weist auch die wenigstens eine weitere Wärmerohrwand dabei vorzugsweise einen kontinuierlichen Materialübergang von einer Außenfläche der Leitschaufel zu einer den weiteren Verdampfungshohlraum begrenzenden, inneren Oberfläche der weiteren Wärmerohrwand hin auf.

Vorzugsweise ist eine die Verdampfungshohlräume trennende Trennwand bei einer derartigen Ausführungsform ebenfalls als eine mit einem Kapillarsystem durchsetzte Wärmerohrwand ausgebildet, die einen kontinuierlichen Materialübergang von einer den ersten Verdampfungshohlraum (teilweise) begrenzenden Oberfläche zur den weiteren Verdampfungshohlraum begrenzenden Oberfläche hin aufweist. Auf diese Weise kann mit der Trennwand zum ersten und/oder zum weiteren Verdampfungshohlraum hin eine vergrößerte Verdunstungsoberfläche bereitgestellt werden, so dass der Grad der Kühlung weiter verbessert wird.

Das Kapillarsystem in der ersten Wärmerohrwand und das Kapillarsystem der mindestens einen weiteren Wärmerohrwand können (in der Leitschaufel oder innerhalb eines die Leitschaufel enthaltenden erfindungsgemäßen Systems) voneinander getrennt oder miteinander verbunden sein. Analoges gilt ggf. für das Kapillarsystem in der Trennwand.

Die erste Wärmerohrwand und die wenigstens eine weitere Wärmerohrwand können bei derartigen Ausführungsformen analog (z.B. jeweils mit mindestens einem Bereich, der - bezogen auf die Wandstärke der Wärmerohrwand im jeweiligen Bereich - Hälften, Drittel und/oder Viertel voneinander verschiedener Porosität wie oben beschrieben aufweist, insbesondere mit nach innen hin zunehmender Porosität) oder verschieden ausgebildet sein. Alternativ oder zusätzlich können die erste und die mindestens eine weitere Wärmerohrwand (im Wesentlichen) insgesamt dieselbe Porosität oder voneinander verschiedene Porositäten aufweisen.

Im Folgenden wird ein bevorzugtes Ausführungsbeispiel der Erfindung anhand einer Zeichnung näher erläutert. Es versteht sich, dass einzelne Elemente und Komponenten auch anders kombiniert werden können als dargestellt.

Es zeigt schematisch:

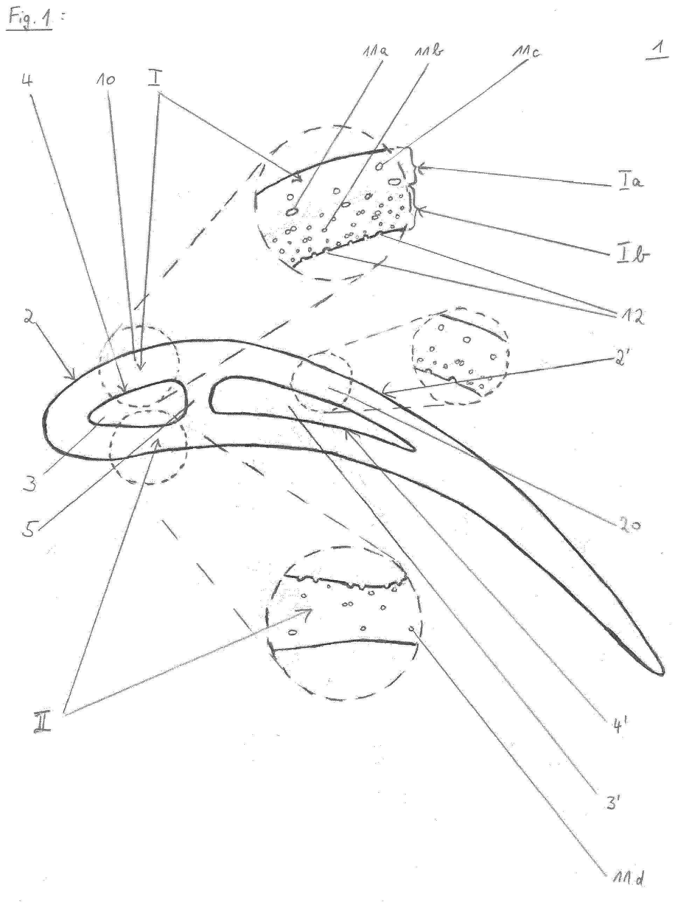

- Figur 1:: eine exemplarische Ausführungsform einer erfindungsgemäßen Leitschaufel im Querschnitt.

In Figur 1 ist ein Querschnitt eine exemplarische Leitschaufel 1 gemäß einer Ausführungsform der vorliegenden Erfindung dargestellt; der Querschnitt liegt dabei in einer Ebene, zu der eine (bezogen auf die Rotationsachse einer Strömungsmaschine, in der die Leitschaufel verwendet werden kann) radiale (nicht dargestellte) Achse senkrecht steht.

Die Leitschaufel 1 weist eine Wärmerohrwand 10 auf, die von einer ersten (äußeren) Oberfläche 2 der Leitschaufel und einer dazu entgegengesetzten zweiten Oberfläche 4 begrenzt wird; die zweite Oberfläche 4 begrenzt einen im Inneren der Leitschaufel liegenden Verdampfungshohlraum 3.

Wie in der Figur mittels Vergrößerungskreisen für die Bereiche I, II schematisch illustriert, ist die Wärmerohrwand 10 von einem Kapillarsystem mit Kapillaren durchsetzt, von denen in der Figur der Übersichtlichkeit halber nur die Kapillaren 11a, 11b, 11c, 11d mit Bezugszeichen versehen sind.

Zur ersten Oberfläche 2 hin ist das Kapillarsystem abgeschlossen, die Oberfläche 2 ist also porenfrei ausgebildet, wohingegen die zweite Oberfläche eine Mehrzahl an Poren 12 ausbildet, durch die hindurch ein (nicht gezeigtes) Fluid im Kapillarsystem in den Verdampfungshohlraum 3 hinein verdampfen kann.

Der heiße Dampf wird durch den Verdampfungshohlraum 3 hindurch in einen kühleren Abschnitt der Leitschaufel oder eines verbundenen Bauteils geleitet (in der Figur nicht dargestellt), wo er kondensiert und von den Kapillaren des Kapillarsystems (bzw. von mit diesen verbundenen Kapillaren des ggf. verbundenen Bauteils) aufgenommen wird, ehe er unter Ausnutzung der Kapillarkräfte durch das Kapillarsystem hindurch wiederum zu den Poren 12 geleitet wird, wo der Kreislauf von vorne beginnt. Mit der Wärmerohrwand 10 und dem Verdampfungshohlraum 3 bildet die Leitschaufel 1 somit ein Wärmerohr aus. Der Verdampfungsprozess sowie der Durchfluss des abgekühlten flüssigen Fluids durch die Kapillaren bewirken eine Kühlung der Leitschaufel.

Dabei weist die Wärmerohrwand von der ersten Oberfläche 2 zur zweiten Oberfläche 4 einen kontinuierlichen Materialübergang auf, ist also monolithisch aus einem sich um die Kapillaren herum durchgehend von der ersten Oberfläche 2 bis zur zweiten Oberfläche 4 erstreckenden Material. Insbesondere kann die Leitschaufel zumindest im Bereich der Wärmerohrwand vorzugsweise mittels generativer Fertigung, beispielsweise mittels selektiven Laserschmelzens hergestellt sein.

Insbesondere im Bereich I kann die Wärmerohrwand 10 bei der dargestellten Ausführungsform bezogen auf ihre Wandstärke (gedanklich) in zwei Hälften Ia, Ib aufgeteilt werden, die sich in Bezug auf ihre jeweilige Porosität unterscheiden: Das Verhältnis des in der Hälfte Ia enthaltenen Kapillarenvolumens (d.h. des/der durch Kapillaren gebildeten Hohlraums/Hohlräume) zum Gesamtvolumen (der Hälfte Ia) ist kleiner als das entsprechende Verhältnis in der Hälfte Ib. In der äußeren Hälfte Ia ist die Leitschaufel damit besonders solide.

Alternativ oder zusätzlich kann eine Gesamtlänge an Kapillaren pro Volumen in der Hälfte Ia vorzugsweise kleiner sein als eine Gesamtlänge an Kapillaren pro Volumen in der Hälfte Ib. Insbesondere können sich die Kapillaren in der Wärmerohrwand vorzugsweise von außen nach innen zunehmend verästeln und in eine entsprechend große Anzahl an Poren 12 an der zweiten Oberfläche 4 münden, so dass diese entsprechend gut mit durch das Kapillarsystem geführtem Fluid benetzt werden kann. Dadurch kann zum einen eine besonders gute Verdampfung und damit Kühlung der Leitschaufel (im Bereich der zweiten Oberfläche) bewirkt werden, zum anderen kann ein Anteil an Fluid, der innerhalb der Wärmerohrwand noch über eine längere Strecke durch die Kapillaren und an eine entferntere Stelle der zweiten Oberfläche 4 zu führen ist, durch von der zweiten Oberfläche 4 entferntere Kapillaren geleitet werden. Auch eine derartige äußere Hälfte Ia der Leitschaufel kann so - mittels des hindurchgeleiteten flüssigen Fluids - effektiv gekühlt werden, zudem kann damit eine hohe Stabilität der Leitschaufel gewährleistet werden. Analoges gilt für entsprechende Drittel bzw. Viertel des Bereichs I.

Die gezeigten Querschnitte der Kapillaren (bzw. der in der Figur geschnittenen Kapillarabschnitte) weisen teils unterschiedliche Formen und/oder Größen (bzw. Durchmesser) auf. Vorzugsweise weisen die Kapillaren in der weiter außen liegenden Hälfte Ia einen größeren mittleren Strömungsdurchmesser auf als die Kapillaren in der weiter innen liegenden Hälfte Ib. Analoges gilt jeweils für entsprechende Drittel bzw. Viertel des Bereichs I.

Wie in der Figur 1 erkennbar, weist die Wärmerohrwand 10 im Bereich II (der an der Druckseite der Leitschaufel angeordnet ist) eine andere, vorliegend eine geringere Porosität auf als im Bereich I (der an der Saugseite der Leitschaufel liegt). Insbesondere kann damit der Wirkung einer äußeren Strömung auf die Temperatur der Leitschaufel Rechnung getragen und so die Kühlung der Leitschaufel einerseits und ihre Stabilität andererseits optimiert werden.

Die dargestellte Leitschaufel 1 weist zusätzlich zur Wärmerohrwand 10 eine weitere Wärmerohrwand 20 auf, die einen weiteren Verdampfungshohlraum 4' im Inneren der Leitschaufel 1 begrenzt und so mit diesem ein weiteres Wärmerohr ausbildet. Entsprechend der Wärmerohrwand 10 ist auch die weitere Wärmerohrwand 20 von einem Kapillarsystem durchsetzt und weist auch sie einen kontinuierlichen Materialübergang von einer die Leitschaufel nach außen begrenzenden äußeren Oberfläche 2' der Wärmerohrwand 20 zur den Verdampfungshohlraum 4' begrenzenden weiteren Oberfläche 4' auf. Das Kapillarsystem in der Wärmerohrwand 10 und das Kapillarsystem in der Wärmerohrwand 20 können innerhalb der Leitschaufel miteinander verbunden oder voneinander getrennt sein (jeweils nicht sichtbar).

Die Verdampfungshohlräume 3 und 3' sind vorliegend durch eine Trennwand 5 voneinander getrennt. Vorzugsweise erstreckt sich das Kapillarsystem in der Wärmerohrwand 10 und/oder das Kapillarsystem in der Wärmerohrwand 20 (jeweils) in die Trennwand hinein (nicht dargestellt). Alternativ oder zusätzlich kann die Trennwand 5 ein separates (von den genannten Kapillarsystemen getrenntes) Kapillarsystem umfassen.

Offenbart ist eine Leitschaufel 1 für eine Strömungsmaschine. Die Leitschaufel umfasst eine mit einem Kapillarsystem durchsetzte Wärmerohrwand 10, die einen kontinuierlichen Materialübergang von einer ersten, die Leitschaufel nach außen begrenzenden Oberfläche 2 zu einer zweiten, der ersten entgegengesetzten und einen Verdampfungshohlraum 3 im Innern der Leitschaufel begrenzenden Oberfläche 4 aufweist.

Offenbart ist ferner ein Verfahren zur Herstellung einer Leitschaufel mit Wärmerohrwand, wobei zumindest die Wärmerohrwand 10 mittels generativer Fertigung ausgebildet wird.

### Bezugszeichen

- 1: Leitschaufel
- 2: die Leitschaufel nach außen begrenzende (erste) Oberfläche der Wärmerohrwand 10
- 2': die Leitschaufel nach außen begrenzende der Wärmerohrwand 20
- 3, 3': Verdampfungshohlraum
- 4: den Verdampfungshohlraum 3 begrenzende (zweite) Oberfläche der Wärmerohrwand 10
- 4': den Verdampfungshohlraum 3' begrenzende (innere) Oberfläche der Wärmerohrwand 20
- 5: Trennwand zwischen den Verdampfungshohlräumen 3, 3'

- 10, 20: Wärmerohrwand
- 11a, 11b, 11c, 11d: Kapillare bzw. Kapillarabschnitt
- 12: Pore

- I, II: Bereich der Wärmerohrwand 10

## Patentansprüche

1. Leitschaufel (1) für eine Strömungsmaschine, wobei die Leitschaufel eine mit einem Kapillarsystem durchsetzte Wärmerohrwand (10) umfasst, **dadurch gekennzeichnet, dass** die Wärmerohrwand einen kontinuierlichen Materialübergang von einer ersten, die Leitschaufel nach außen begrenzenden Oberfläche (2) zu einer zweiten, der ersten entgegengesetzten Oberfläche (4) aufweist, die einen Verdampfungshohlraum (3) im Innern der Leitschaufel begrenzt.

2. Leitschaufel gemäß Anspruch 1, wobei die Wärmerohrwand mindestens einen sich zwischen einem Flächenbereich der ersten Oberfläche (2) und einem Flächenbereich der zweiten Oberfläche (4) erstreckenden Bereich (I) umfasst, in dem sie bezogen auf ihre Wandstärke
- zwei Hälften (Ia, Ib) mit voneinander verschiedener Porosität und/oder Kapillarengesamtlänge,
- zwei oder drei Drittel mit jeweils voneinander verschiedener Porosität und/oder Kapillarengesamtlänge und/oder
- zwei, drei oder vier Viertel mit jeweils voneinander verschiedener Porosität und/oder Kapillarengesamtlänge
aufweist.

3. Leitschaufel gemäß einem der Ansprüche 1 oder 2, wobei die Wärmerohrwand zwei oder mehr Bereiche (I, II) aufweist, die sich jeweils zwischen einem Flächenbereich der ersten Oberfläche (2) und einem Flächenbereich der zweiten Oberfläche (4) erstrecken und die voneinander verschiedene Porositäten aufweisen.

4. Leitschaufel gemäß Anspruch 3, wobei sich die zwei oder mehr Bereiche in ihrem jeweiligen Abstand zu einer Leitschaufelspitze der Leitschaufel unterscheiden.

5. Leitschaufel gemäß einem der vorhergehenden Ansprüche, wobei das Kapillarsystem Kapillaren bzw. Kapillarabschnitte (11a, 11b, 11c, 11d) unterschiedlicher Querschnittsflächen umfasst.

6. Leitschaufel gemäß einem der vorhergehenden Ansprüche, wobei das Kapillarsystem eine Vielzahl an Verzweigungen aufweist.

7. Leitschaufel gemäß einem der vorhergehenden Ansprüche, wobei das Kapillarsystem zur ersten Oberfläche (2) hin abgeschlossen ausgebildet ist.

8. Leitschaufel gemäß einem der vorhergehenden Ansprüche, wobei die Wärmerohrwand (10) eine erste Wärmerohrwand und der Verdampfungshohlraum (3) ein erster Verdampfungshohlraum ist, und wobei im Innern der Leitschaufel (1) mindestens ein weiterer Verdampfungshohlraum (3') angeordnet ist, der mindestens teilweise durch eine innere Oberfläche (4') wenigstens einer weiteren Wärmerohrwand (20) der Leitschaufel begrenzt wird, wobei die wenigstens eine weitere Wärmerohrwand (20) mit einem weiteren Kapillarsystem durchsetzt ist und einen kontinuierlichen Materialübergang von einer die Leitschaufel nach außen begrenzenden Oberfläche (2') der weiteren Wärmerohrwand zur inneren Oberfläche (4') hin aufweist.

9. System mit mindestens einer Leitschaufel gemäß einem der vorhergehenden Ansprüche, wobei das Kapillarsystem der Leitschaufel mindestens Teil eines in dem System abgeschlossenen Innenvolumens ist, das ein Kühlfluid enthält.

10. Verfahren zur Herstellung einer Leitschaufel gemäß einem der Ansprüche 1 bis 8, wobei zumindest die Wärmerohrwand (10) mit dem Kapillarsystem mittels generativer Fertigung ausgebildet wird.

## Claims

1. Guide vane (1) for a turbomachine, the guide vane comprising a heat pipe wall (10) through which a capillary system passes, **characterized in that** the heat pipe wall has a continuous material transition from a first surface (2) which outwardly defines the guide vane to a second surface (4) which is opposite the first surface and defines an evaporation cavity (3) in the interior of the guide vane.

2. Guide vane according to claim 1, wherein the heat pipe wall comprises at least one region (I) which extends between a surface region of the first surface (2) and a surface region of the second surface (4) and in which said wall has, based on the wall thickness thereof,
- two halves (Ia, Ib) having porosities and/or total capillary lengths that are different from one another,
- two or three thirds each having porosities and/or total capillary lengths that are different from one another, and/or
- two, three or four quarters each having porosities and/or total capillary lengths that are different from one another.

3. Guide vane according to either claim 1 or claim 2, wherein the heat pipe wall has two or more regions (I, II) which each extend between a surface region of the first surface (2) and a surface region of the second surface (4) and have porosities which are different from one another.

4. Guide vane according to claim 3, wherein the two or more regions differ in terms of their respective distances from a guide vane tip of the guide vane.

5. Guide vane according to any of the preceding claims, wherein the capillary system comprises capillaries or capillary portions (11a, 11b, 11c, 11d) which have different cross-sectional areas.

6. Guide vane according to any of the preceding claims, wherein the capillary system has a plurality of branches.

7. Guide vane according to any of the preceding claims, wherein the capillary system is designed so as to be closed toward the first surface (2).

8. Guide vane according to any of the preceding claims, wherein the heat pipe wall (10) is a first heat pipe wall and the evaporation cavity (3) is a first evaporation cavity, and wherein at least one further evaporation cavity (3') is arranged in the interior of the guide vane (1), which further evaporation cavity is at least partially delimited by an inner surface (4') of at least one further heat pipe wall (20) of the guide vane, wherein a further capillary system passes through the at least one further heat pipe wall (20) and said further heat pipe wall has a continuous material transition from a surface (2') of the further heat pipe wall that outwardly defines the guide vane toward the inner surface (4').

9. System comprising at least one guide vane according to any of the preceding claims, wherein the capillary system of the guide vane is at least part of an internal volume enclosed in the system that contains a cooling fluid.

10. Method for producing a guide vane according to any of claims 1 to 8, wherein at least the heat pipe wall (10) having the capillary system is formed by means of additive manufacturing.

## Revendications

1. Aube directrice (1) pour une turbomachine, l'aube directrice comprenant un caloduc (10) traversé par un système capillaire, **caractérisée en ce que** le caloduc présente une transition de matière continue allant d'une première surface (2) délimitant l'aube directrice à l'extérieur à une seconde surface (4) opposée à la première, qui délimite une cavité d'évaporation (3) à l'intérieur de l'aube directrice.

2. Aube directrice selon la revendication 1, dans laquelle le caloduc comprend au moins une zone (I) s'étendant entre une zone de surface de la première surface (2) et une zone de surface de la seconde surface (4), zone (I) dans laquelle ledit caloduc présente, par rapport à son épaisseur de paroi,
- deux moitiés (Ia, Ib) présentant une porosité et/ou une longueur totale de capillaire différentes,
- deux ou trois tiers présentant une porosité et/ou une longueur totale de capillaire différentes, et/ou
- deux, trois ou quatre quarts présentant respectivement une porosité et/ou une longueur totale de capillaire différentes.

3. Aube directrice selon l'une des revendications 1 ou 2, dans laquelle le caloduc présente deux ou plusieurs zones (I, II) s'étendant chacune entre une zone de surface de la première surface (2) et une zone de surface de la seconde surface (4), et présentant des porosités différentes.

4. Aube directrice selon la revendication 3, dans laquelle les au moins deux zones diffèrent par leur distance respective par rapport à une extrémité de l'aube directrice.

5. Aube directrice selon l'une des revendications précédentes, dans laquelle le système capillaire comprend des capillaires ou des segments capillaires (11a, 11b, 11c, 11d) de différentes surfaces de section transversale.

6. Aube directrice selon l'une des revendications précédentes, dans laquelle le système capillaire comporte une pluralité de ramifications.

7. Aube directrice selon l'une des revendications précédentes, dans laquelle le système capillaire est fermé vers la première surface (2).

8. Aube directrice selon l'une des revendications précédentes, dans laquelle le caloduc (10) est un premier caloduc et la cavité d'évaporation (3) est une première cavité d'évaporation, et dans laquelle au moins une autre cavité d'évaporation (3') est disposée à l'intérieur de l'aube directrice (1), laquelle autre cavité d'évaporation est délimitée au moins partiellement par une surface intérieure (4') d'au moins un autre caloduc (20) de l'aube directrice, ledit au moins un autre caloduc (20) étant traversé par un autre système capillaire et présentant une transition de matière continue allant d'une surface (2') délimitant l'aube directrice vers l'extérieur de l'autre caloduc à la surface intérieure (4').

9. Système comportant au moins une aube directrice selon l'une des revendications précédentes, dans lequel le système capillaire de l'aube directrice est au moins une partie d'un volume intérieur scellé dans le système, et contient un fluide de refroidissement.

10. Procédé de fabrication d'une aube directrice selon l'une des revendications 1 à 8, dans lequel au moins le caloduc (10) doté du système capillaire est réalisé par fabrication générative.
